# EUROPEAN PATENT APPLICATION

(11) **EP 3 116 170 A1**
(43) Date of publication of application: **11.01.2017**
(21) Application number: 14884301.4
(22) Date of filing: 10.12.2014
(51) Int. Cl.: H04L 12/46

(54) **SYSTEM AND METHOD FOR INTERWORKING BETWEEN NDN AND CDN**

(30) Priority: 04.03.2014 CN 201410076540
(71) Applicant: Institute of Acoustics, Chinese Academy of Sciences, Haidian District Beijing 100190 (CN)
(72) Inventor: WANG, Lingfang, Beijing 100190 (CN); YOU, Jiali, Beijing 100190 (CN); WANG, Jinlin, Beijing 100190 (CN)
(74) Representative: Walsh, Marie Goretti
(86) International application number: PCT/CN2014/093485
(87) International publication number: WO 2015/131598

(57) **Abstract**

The present invention provides a named data networking-based content delivery system and method. The system comprises a named data networking and a content delivery network, and the system further comprises a joint processing gateway. The named data networking is used for providing data content to a node in the content delivery network or sending a content request command to the content delivery network. The named data networking is a network formed by devices supporting a named data networking protocol. The content delivery network is used for providing data content to a node in the named data networking network or sending a content request command to the named data networking network. The content delivery network is a content delivery network set up over an IP network. The joint processing gateway is used for converting content data and transmitting the converted data from the named data networking to the content delivery network; and used for converting content data and transmitting the converted content data from the content delivery network to the named data networking.

## Description

### TECHNICAL FIELD

The present invention relates to the field of information network technology, and particularly to a system for interworking between a NDN (named data networking) and a CDN (content delivery network).

### BACKGROUND OF THE INVENTION

Currently, it is inevitably to use a content delivery network upon a business is done under the environment of Internet. The content delivery network has become one of the most widely used overlay networks in the present IP network, whether for traditional web browsing or for audio sharing, video on demand or software development. The content delivery network is an indispensable facility for the normal operations of various businesses at present.

The Internet, since the dawn thereof at late 1960s, has undergone a progressive development in 1970s, a steady growth in 1980s, a flourish development in 1990s and an Internet bubble in the early twentieth century. People have experienced an enormous impact of new technologies in social development but also limitations brought by such technologies. As a consequence, since the 1990s, people of vision started to contemplate and practice alternatives for the IP architecture. In this process, there are two ideas: one is an evolutionary development idea for IP, and the other is a revolutionary development idea. After more than twenty years of practice and exploration, it is widely recognized that the evolutionary development idea cannot address the problems faced by IP which is a protocol with defects by nature, thus turning to the revolutionary development idea. United States, European Union and Japan have gone farther on the revolutionary development ways. Typical plan-level projects are GENI, FIRE and JNPlus, under which the fine-grained projects, such as NDN, MobilityFirst, NEBULA, 4WARD, NWGN and the like, have different emphasis. The NDN, which places emphasis on content, is a typical representative of content-centered networking, and transfers current focus from the position of content to the content itself. That is, the future Internet should focus on content, which is inherently supported by the future Internet.

We believe that there may exist a variety of architectures in the future Internet, one of which should be the current IP-based Internet. In the future Internet, there may also exist content problems. Therefore, it is necessary to solve the problem of interworking between the content-centered network

(e.g. NDN) and the content delivery network over the existing Internet, there isn't such a system yet at present. But current CDN network and NDN network are independent, no interworking between them is yet realized.

### SUMMARY OF THE INVENTION

An objective of the present invention lies in that in order to overcome the problems of interworking between NDN and CDN and smoothly build a bridge for content between the existing Internet and the future Internet, a system and method for interworking between the NDN and the CDN is thereby provided. The present invention provides a named data networking-based content delivery system and method.

In order to achieve the above objectives, the present invention provides a named data networking-based content delivery system, said system comprises: a named data networking and a content delivery network, and said system further comprises: a joint processing gateway located between the named data networking and the content delivery network;
the named data networking is used for providing data content to a node in the content delivery network or sending a content request command to the content delivery network; wherein the named data networking is a network formed by devices supporting a named data networking protocol;
the content delivery network is used for providing data content to a node in the named data networking network or sending a content request command to the named data networking network; wherein the content delivery network is a content delivery network set up over an IP network;
the joint processing gateway further comprises: a first processing module and a second processing module; the first processing module is used for converting content data and transmitting the converted data from the named data networking to the content delivery network; the second processing module is used for converting content data and transmitting the converted content data from the content delivery network to the named data networking.

Optionally, the above described joint processing gateway is a dedicated device, a server, a PC or a cluster of servers.

Further optionally, the above described first processing module comprises:
a request receiving submodule used for receiving a data request command sent by a client of the content delivery network on a fixed port for TCP or UDP, and information of a name of content and an offset is included in the data request command;
a message of interest generating submodule used for converting, according to a data identification generating algorithm, the name of content and the offset into a data identification in a message of interest to generate and send the message of interest to a neighboring node in the named data networking;
a first data message receiving submodule used for receiving a data message transmitted in reverse by the named data networking;
a first data caching submodule used for judging whether the received data message transmitted in reverse by the named data networking already exists, deleting the data message if yes, caching the data message if not;
a first data sending submodule used for finding a data request queue to match the data request, sending the cached data message to a matched requester, and discarding the cached data message that no matched requester is found.
the above described second processing module comprises:
a message of interest receiving submodule used for receiving a message of interest sent by the named data networking;
a judgment and decision-making submodule used for judging whether there is a data message received by the message of interest receiving submodule in a local data cache, initiating a second data sending submodule if yes; parsing to obtain a name of data content, constructing a mapping table between the name and the message of interest and sending the parsed name of content to a content searching submodule, if not;
the content searching submodule used for searching in the content delivery network for data content corresponding to the name of content, and then obtaining an URL corresponding to content and transmitting the obtained URL to a request generating submodule;
the request generating submodule used for generating, according to the URL and a protocol employed by the URL, a content request and issuing a content request command to the content delivery network;
a second data receiving submodule used for receiving the data message corresponding to the name of content returned by the content delivery network according to the content request command, and sending the received data message to a data caching submodule and a second data sending submodule;
a data message generating submodule used for generating a data message of the named data networking and sending the generated data message to the second data sending submodule;
the second data sending submodule used for sending along a reverse path of the message of interest, according to a table item of the mapping table, the data message that is sent from the second data receiving submodule;
the second data caching submodule used for judging whether the data message sent by the second data receiving submodule already exists, discarding the data message if yes; caching the data message locally if not.

In addition, the present invention further provides a named data networking-based content delivery method, said method comprises:
step 101, generating and sending a message of interest to the named data networking network utilizing a named data networking gateway;
step 102, receiving the message of interest and generating a data request message according to the message of interest utilizing a content delivery network gateway, and searching for content and sending content data message to the named data networking network utilizing the content delivery network.

Optionally, the above described step 101) comprises:
step 101-1): receiving a data request in which information of a name of content and an offset is included, from a client of the content delivery network on a fixed port for TCP or UDP;
step 101-2): converting, according to a data identification generating algorithm in the named data networking, the name of content and the offset into a data identification in the message of interest, to generate and send the message of interest to a neighboring node in the named data networking;
step 101-3): receiving a data message transmitted in reverse by the neighboring node in the named data networking;
step 101-4): finding a data request queue to match a data message request, sending data to a matched requester and discarding the data message transmitted in reverse if no match requester is found;
step 101-5): judging whether there is the data message transmitted in reverse locally, discarding the data message transmitted in reverse if yes; caching locally the data message transmitted in reverse if not.

The above described step 102) comprises:
step 102-1): receiving the message of interest sent from the neighboring node in the named data networking network, judging whether there is corresponding content in a local data cache, obtaining content data and generating a NDN data message according to the content data, sending the NDN data message along a reverse path of the message of interest, if yes; parsing to obtain a name of content and constructing a mapping table between the name and the message of interest if not;
step 102-2): searching in the content delivery network for corresponding data content according to the name to obtain a corresponding URL;
step 102-3): generating, according to a protocol employed by the URL, a content request and issuing a content request command, then receiving the data content corresponding to the name of content, generating the NDN data message according to the obtained data content, and sending the NDN data message along the reverse path of the message of interest.

The method further comprises judging whether there is corresponding data in the local cache after the data corresponding to the name of content is received in step 102-3), discarding data if yes and storing it locally if not.

As compared with the prior art, the technical advantage of the present invention lies in that the present invention will realize a content-level interworking between a CDN network and a NDN network and solve the future problem of sharing of contents. In early stages of development of the NDN network, contents may be injected into the NDN network through the system of the present invention, facilitating the NDN network to develop successfully one of the influential networks in the future, in the meantime facilitating the CDN network to continue to be a basic technology in the future network environments.

### BRIEF DESCRIPTION OF THE DRAWINGS

Fig. 1 is a structural diagram of a system according to the present invention;
Fig. 2 is a constitutional diagram of a NDN/CDN gateway;
Fig. 3 is a flow diagram of a method for transmitting content from NDN to CDN;
Fig. 4 is a flow diagram of a method for transmitting content from CDN to NDN;
Fig. 5 is one of application scenarios where NDN network obtains content from CDN network.

### DETAILED DESCRIPTION OF THE INVENTION

The technical solutions of the present invention will be described below in further detail through the accompanying drawings and embodiments.

NDN is employed to refer to a named data networking network, and CDN is employed to refer to a content delivery network, in the following technical solutions recited.

A system for interworking between NDN and CDN, as provided by the present invention, comprises a NDN network, a NDN/CDN gateway and a CDN network. The NDN network refers to a network formed by devices supporting a NDN-related protocol; the NDN/CDN gateway refers to a device functioning as a gateway between the NDN and the CDN, through which content may be transmitted mutually between the NDN network and the CDN network; the CDN network refers to a content delivery network set up over an IP network. The NDN network and the CDN network are organic compositions of the present invention, but contents thereof are not included within the scope of the present invention, and therefore no details will be given below.

In the above described technical solution, the NDN/CDN gateway may be a dedicated device, a server, a PC or a cluster of servers. The gateway is further divided into two parts: (1) a processing module of content from the NDN to the CDN (hereinafter referred to as N2C), the N2C module comprises a CDN request receiving submodule, a NDN message of interest generating submodule, a NDN data message receiving submodule, a data caching submodule and a CDN data sending submodule, (2) a processing module of content from the CDN to the NDN (hereinafter referred to as C2N), the C2N module comprises a NDN message of interest receiving submodule, a CDN request generating submodule, a CDN content searching submodule, a CDN data receiving submodule, a data caching submodule, a NDN data message generating submodule and a NDN data sending submodule.

In order to achieve the above described objective of the invention, a method for interworking between NDN and CDN, as provided by the invention, comprises a method for transmitting content from the NDN to the CDN and a method for transmitting content from the CDN to the NDN. The method for transmitting content from the NDN to the CDN, processed by a N2C module in a NDN/CDN gateway, comprises the following substeps:
1) a CDN request receiving submodule receives a data request in which information such as a name of content and an offset usually represented in the form of an URL, from a client on a fixed port for TCP or UDP, and transmits the information such as the name of content and the offset to a NDN message of interest generating submodule;
2) the NDN message of interest generating submodule converts, according to a data identification generating algorithm in the NDN network, the name of content and the offset into a data identification in a message of interest to generate and send the message of interest to a neighboring node in the NDN network;
3) a NDN data message receiving submodule receives a data message transmitted in reverse in the NDN network;
4) judging whether the message already exists locally, discarding the message if yes, transmitting the message to a data caching submodule for caching while to a CDN data sending submodule if not;
5) the data caching submodule stores the data locally according to a certain rule;
6) the CDN data sending submodule finds a data request queue to match the data request, sends the data to a matched requester, and discards the message if no matched one is found.

In the above described technical solution, the method for transmitting content from the CDN to the NDN, processed by a C2N module in the NDN/CDN gateway, comprises the following substeps:
1) a NDN message of interest receiving submodule receives a message of interest sent from a neighboring node in a NDN network, judges whether there is corresponding content in a local data cache, obtains and transmits a content data to a NDN data sending submodule if yes; parses to obtain a name of content, constructs a mapping table NameMapping between the name and the message of interest and sends the name of content to a CDN content searching submodule, if not;
2) the CDN searching submodule searches in the CDN network for corresponding data content according to the name of content to obtain an URL corresponding to content; sends the URL to a CDN request generating submodule;
3) the CDN request generating submodule generates a content request according to a protocol employed by the URL and issues the request;
4) a CDN data receiving submodule receives data corresponding to the name of content and sends one copy of data to a data caching submodule and one copy of data to the NDN data sending submodule;
5) the data caching submodule judges whether there is corresponding data in a local cache, discards the data if yes, and stores the data locally if not;
6) the NDN data sending submodule invokes a NDN data message generating submodule to generate and send a NDN data message along a reverse path of the message of interest.

The present invention solves the problems of interworking between the NDN and the CDN, and smoothly builds a bridge for content between the existing Internet and the future Internet.

### Embodiment 1

In this embodiment, a system for interworking between a NDN and a CDN, as provided by the invention, comprises a NDN network, a NDN/CDN gateway and a CDN network. The NDN network refers to a network formed by devices supporting a NDN-related protocol; the NDN/CDN gateway refers to a device functioning as a gateway between the NDN and the CDN, through which content may be transmitted mutually between the NDN network and the CDN network; the CDN network refers to a content delivery network set up over an IP network.

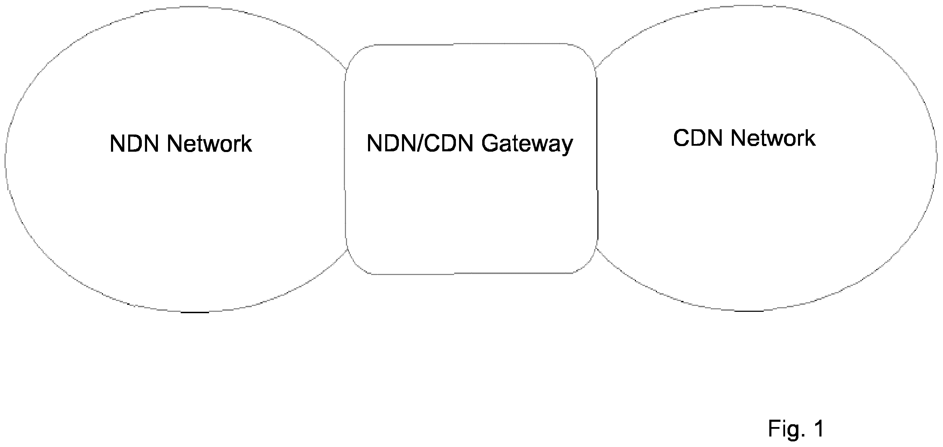

As illustrated in Fig. 1, the NDN/CDN gateway (i.e., a joint gateway) in this embodiment may be a dedicated device, a server, a PC or a cluster of servers. The NDN/CDN gateway is further divided into two parts respectively: (1) a processing module of content from the NDN to the CDN (hereinafter referred to as N2C), the N2C module comprises a CDN request receiving submodule, a NDN message of interest generating submodule, a NDN data message receiving submodule, a data caching submodule and a CDN data sending submodule, (2) a processing module of content from the CDN to the NDN (hereinafter referred to as C2N), the C2N module comprises a NDN message of interest receiving submodule, a CDN request generating submodule, a CDN content searching submodule, a CDN data receiving submodule, a data caching submodule, a NDN data message generating submodule and a NDN data sending submodule.

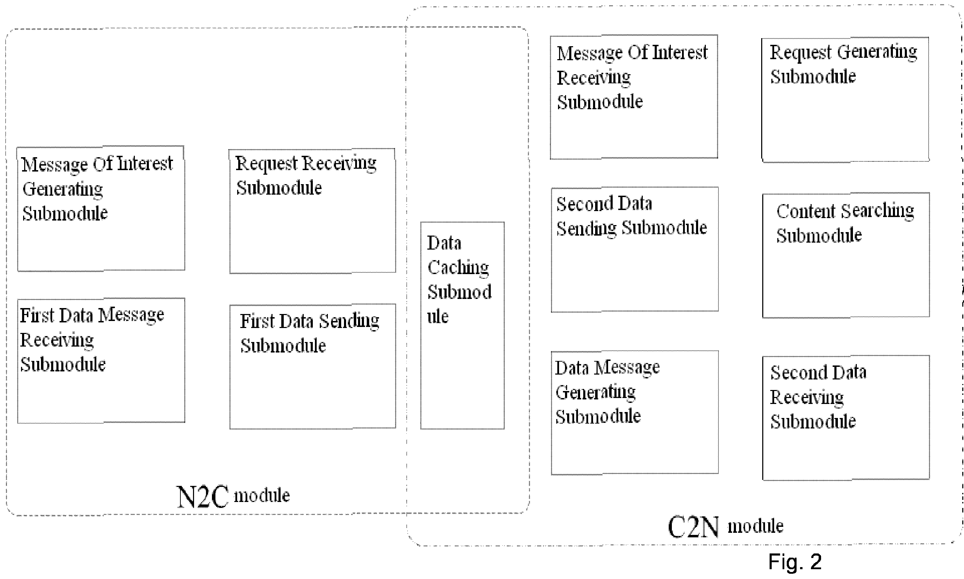

The NDN/CDN gateway is constituted as illustrated in Fig. 2:
the named data networking gateway comprises:
   a request receiving submodule used for receiving a data request command sent by a client of the content delivery network on a fixed port for TCP or UDP, and information such as a name of content and an offset is included in the data request command;
   a message of interest generating submodule used for converting, according to a data identification generating algorithm, the name of content and the offset into a data identification in a message of interest to generate and send the message of interest to a neighboring node in the named data networking;
   a first data message receiving submodule used for receiving a data message transmitted in reverse by the named data networking;
   a first data caching submodule used for judging whether the received data message transmitted in reverse by the named data networking already exists, deleting the data message if yes, caching the data message if not;
   a first data sending submodule used for finding a data request queue to match the data request, sending the cached data message to a matched requester and discarding the cached data message that no matched requester is found.

The content delivery network gateway comprises:
a message of interest receiving submodule used for receiving a message of interest sent by the named data networking;
a judgment and decision-making submodule used for judging whether there is a data message received by the message of interest receiving submodule in a local data cache, initiating a second data sending submodule if yes; parsing to obtain a name of data content, constructing a mapping table between the name and the message of interest and sending the parsed name of content to a content searching submodule, if not;
the content searching submodule used for searching in the content delivery network for data content corresponding to the name of content, and then obtaining an URL corresponding to content and transmitting the obtained URL to a request generating submodule;
the request generating submodule used for generating a content request according to the URL and a protocol employed by the URL, and issuing a content request command to the content delivery network;
a second data receiving submodule used for receiving the data message corresponding to the name of content returned by the content delivery network according to the content request command, and sending the received data message to a data caching submodule and a second data sending submodule;
a data message generating submodule used for generating a data message of the named data networking and sending the generated data message to the second data sending submodule;
the second data sending submodule used for sending along a reverse path of the message of interest, according to a table item of the mapping table, the data message that is sent from the second data receiving submodule;
the second data caching submodule used for judging whether the data message sent by the second data receiving submodule already exists, discarding the data message if yes; caching the data message locally if not.

In some embodiments, the above described first data caching submodule and second data caching submodule share one data caching submodule as shown in Fig. 2.

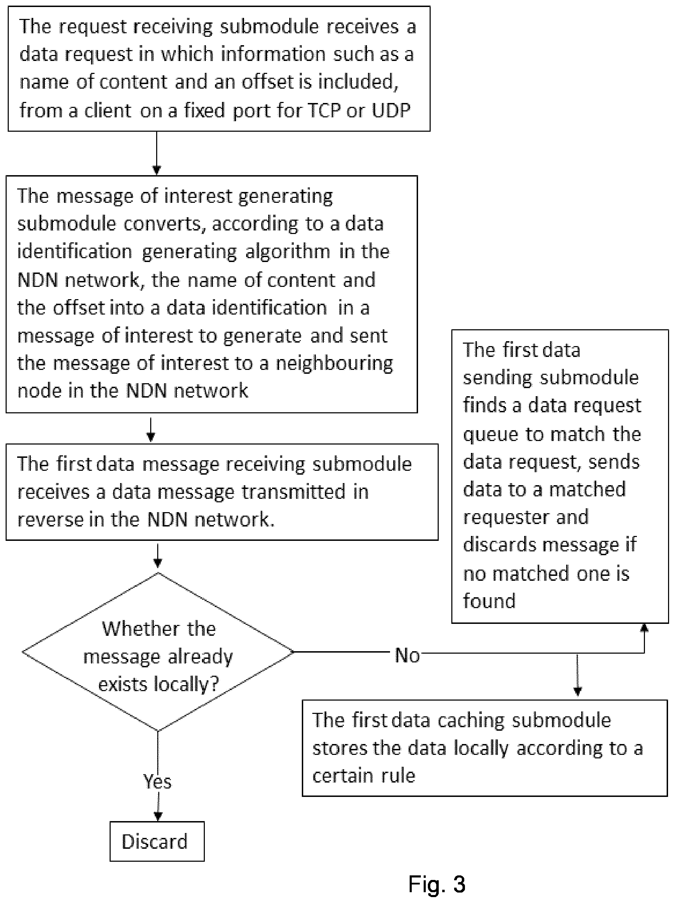

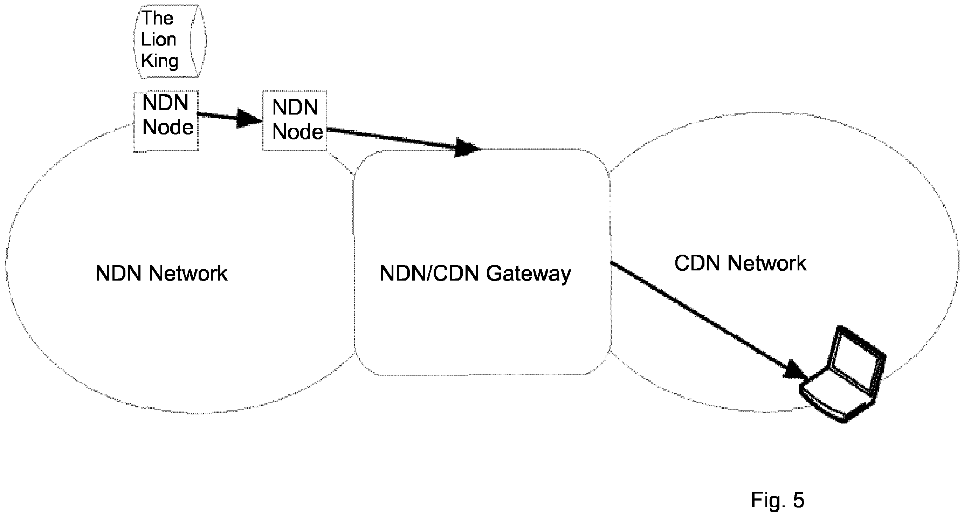

The method for interworking between the NDN and the CDN will be explained in conjunction with more specific application scenario. As illustrated in Fig. 5, one application scenario provided by this embodiment is that: first, a user on the CDN network wants to find a movie "the Lion King", and it is supposed that there is no such a movie on the CDN network. The current situation corresponds to an instance that content is transmitted from the NDN to the CDN, that is, the instance is processed by a N2C module in the NDN/CDN gateway, a processing flow thereof is seen in Fig. 3 and no details will be given here. The data flow diagram is as indicated by black lines in Fig. 5.

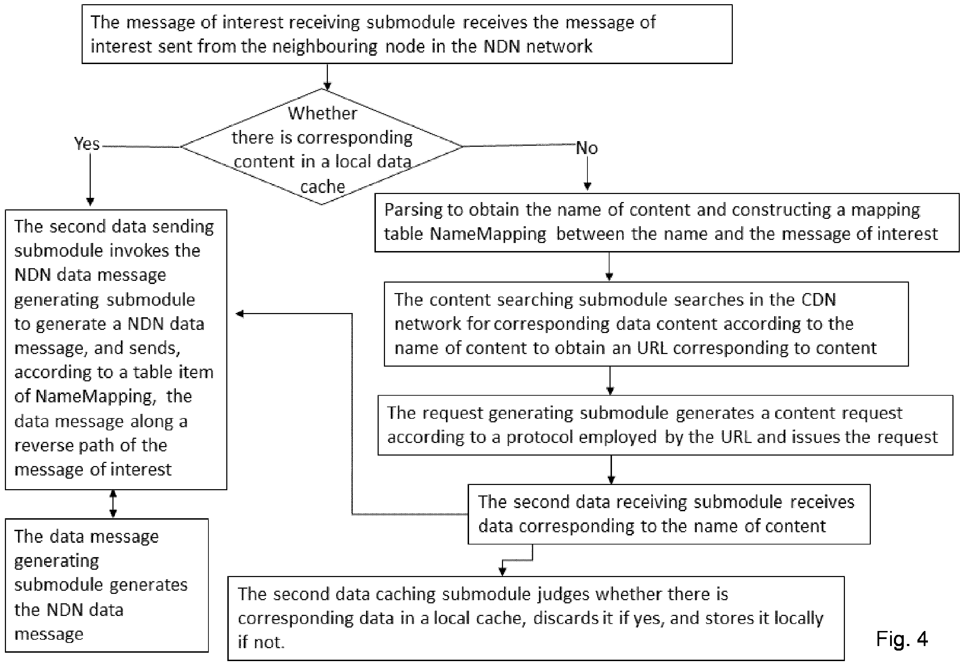

In the case of no content on the NDN network, which corresponds to an instance that content is transmitted from the CDN to the NDN, that is, the instance is processed by a C2N module in the NDN/CDN gateway, a processing flow thereof is seen in Fig. 4 and no details will be given here.

A method for interworking between NDN and CDN, as provided in this embodiment, comprises a method for transmitting content from the NDN to the CDN and a method for transmitting content from the CDN to the NDN. The method for transmitting content from the NDN to the CDN, processed by the N2C module in the NDN/CDN gateway, comprises the following substeps:
1) a CDN request receiving submodule receives a data request in which information such as a name of content and an offset usually represented in the form of an URL is included, from a client on a fixed port for TCP or UDP, and transmits the information such as the name of content and the offset to a NDN message of interest generating submodule;
2) the NDN message of interest generating submodule converts, according to a data identification generating algorithm in the NDN network, the name of content and the offset into a data identification in a message of interest to generate and send the message of interest to a neighboring node in the NDN network;
3) a NDN data message receiving submodule receives a data message transmitted in reverse in the NDN network;
4) judging whether the message already exists locally, discarding the message if yes, transmitting the message to a data caching submodule for caching while to a CDN data sending submodule if not;
5) the data caching submodule stores the data locally according to a certain rule;
6) the CDN data sending submodule finds a data request queue to match the data request, sends data to a matched requester, and discards the message if no matched one is found.

In the above described technical solution, the method for transmitting content from the CDN to the NDN, processed by the C2N module in the NDN/CDN gateway, comprises the following substeps:
1) the NDN message of interest receiving submodule receives the message of interest sent from the neighboring node in the NDN network, judges whether there is corresponding content in a local data cache, obtains and transmits content data to the NDN data sending submodule if yes; parses to obtain a name of content, constructs a mapping table NameMapping between the name and the message of interest, and sends the name of content to the CDN content searching submodule, if not;
2) the CDN searching submodule searches in the CDN network for corresponding data content according to the name of content to obtain an URL corresponding to content; sends the URL to the CDN request generating submodule;
3) the CDN request generating submodule generates a content request according to a protocol employed by the URL and issues the request;
4) the CDN data receiving submodule receives data corresponding to the name of content and sends one copy of the data to the data caching submodule and one copy of the data to the NDN data sending submodule;
5) the data caching submodule judges whether there is corresponding data in the local cache, discards the data if yes, and stores the data locally if not;
6) the NDN data sending submodule invokes the NDN data message generating submodule to generate a NDN data message, and sends, according to a table item of the mapping table, the data message along a reverse path of the message of interest.

Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope and spirit of the technical solutions of the present invention, and thereby should all be encompassed within the scope of the claims of the present invention.

## Claims

1. A named data networking-based content delivery system, comprising: a named data networking and a content delivery network, **characterized in that** the system further comprises: a joint processing gateway located between the named data networking and the content delivery network;
the named data networking is used for providing data content to a node in the content delivery network or sending a content request command to the content delivery network; wherein the named data networking is a network formed by devices supporting a named data networking protocol;
the content delivery network is used for providing data content to a node in the named data networking network or sending a content request command to the named data networking network; wherein the content delivery network is a content delivery network set up over an IP network;
the joint processing gateway further comprises: a first processing module and a second processing module;
the first processing module is used for converting the content data and transmitting the converted data from the named data networking to the content delivery network;
the second processing module is used for converting the content data and transmitting the converted content data from the content delivery network to the named data networking.

2. The named data networking-based content delivery system according to claim 1, **characterized in that** the joint processing gateway is a dedicated device, a server, a PC or a cluster of servers.

3. The named data networking-based content delivery system according to claim 1 or 2, **characterized in that** the first processing module comprises:
a request receiving submodule, used for receiving a data request command sent by a client of the content delivery network on a fixed port for TCP or UDP, and information of a name of content and an offset is included in the data request command;
a message of interest generating submodule, used for converting, according to a data identification generating algorithm, the name of content and the offset into a data identification in a message of interest to generate and send the message of interest to a neighboring node in the named data networking;
a first data message receiving submodule, used for receiving a data message transmitted in reverse by the named data networking;
a first data caching submodule, used for judging whether the received data message transmitted in reverse by the named data networking already exists, deleting the data message if yes, caching the data message if not;
a first data sending submodule, used for finding a data request queue to match the data request, sending the cached data message to a matched requester, and discarding the cached data message that no matched requester is found.

4. The named data networking-based content delivery system according to claim 1 or 2, **characterized in that** the second processing module comprises:
a message of interest receiving submodule, used for receiving a message of interest sent by the named data networking;
a judgment and decision-making submodule, used for judging whether there is a data message received by the message of interest receiving submodule in a local data cache, initiating a second data sending submodule if yes; parsing to obtain a name of data content, constructing a mapping table between the name and the message of interest and sending the parsed name of content to a content searching submodule, if not;
the content searching submodule, used for searching in the content delivery network for data content corresponding to the name of content, and then obtaining an URL corresponding to content and transmitting the obtained URL to a request generating submodule;
the request generating submodule, used for generating a content request according to the URL and a protocol employed by the URL, and issuing a content request command to the content delivery network;
a second data receiving submodule, used for receiving the data message corresponding to the name of content returned by the content delivery network according to the content request command, and sending the received data message to a data caching submodule and a second data sending submodule;
a data message generating submodule, used for generating a data message of the named data networking and sending the generated data message to the second data sending submodule;
the second data sending submodule, used for sending along a reverse path of the message of interest, according to a table item of the mapping table, the data message that is sent from the second data receiving submodule;
the second data caching submodule, used for judging whether the data message sent by the second data receiving submodule already exists, discarding the data message if yes; caching the data message locally if not.

5. A named data networking-based content delivery method which is based on the content delivery system of any one of claims 1-4, the method comprises:
step 101, generating and sending a message of interest to the named data networking network utilizing a named data networking gateway;
step 102, receiving the message of interest and generating a data request message according to the message of interest utilizing a content delivery network gateway, and searching for content and eventually sending the searched content data message to the named data networking network utilizing the content delivery network.

6. The named data networking and content delivery network-based content delivery method according to claim 5, **characterized in that** the step 101) comprises:
step 101-1): receiving a data request in which information of a name of content and an offset is included, from a client of the content delivery network on a fixed port for TCP or UDP;
step 101-2): converting, according to a data identification generating algorithm in the named data networking, the name of content and the offset into a data identification in the message of interest, to generate and send the message of interest to a neighboring node in the named data networking;
step 101-3): receiving a data message transmitted in reverse by the neighboring node in the named data networking;
step 101-4): finding a data request queue to match a data message request, sending data to a matched requester and discarding the data message transmitted in reverse if no match requester is found;
step 101-5): judging whether there is the data message transmitted in reverse locally, discarding the data message transmitted in reverse if yes; caching locally the data message transmitted in reverse if not.

7. The named data networking and content delivery network-based content delivery method according to claim 6, **characterized in that** the step 102) comprises:
step 102-1): receiving the message of interest sent from the neighboring node in the named data networking network, judging whether there is corresponding content in a local data cache, obtaining content data and generating a NDN data message according to the content data, sending the NDN data message along a reverse path of the message of interest, if yes; parsing to obtain a name of content and constructing a mapping table between the name and the message of interest if not;
step 102-2): searching in the content delivery network for corresponding data content according to the name to obtain a corresponding URL;
step 102-3): generating, according to a protocol employed by the URL, a content request and issuing a content request command, then receiving the data content corresponding to the name of content, generating the NDN data message according to the obtained data content, and sending the NDN data message along the reverse path of the message of interest.

8. The named data networking and content delivery network-based content delivery method according to claim 7, **characterized in that** further comprising judging whether there is corresponding data in the local cache after the data corresponding to the name of content is received in step 102-3), discarding data if yes and storing it locally if not.
